# EUROPEAN PATENT SPECIFICATION

(11) **EP 0 734 206 B1**
(45) Date of publication and mention of the grant of the patent: **13.01.1999**
(21) Application number: 95903171.7
(22) Date of filing: 30.11.1994
(51) Int. Cl.: A01N 25/30, A01N 57/20

(54) **SURFACTANTS PROVIDING ENHANCED EFFICACY AND/OR RAINFASTNESS TO PESTICIDE FORMULATIONS**
VERBESSERTE WIRKSAMKEIT UND/ODER REGENFESTIGKEIT AN PESTIZIDE FORMULIERUNGEN AUFWEISENDE TENSIDE
TENSIOACTIFS CONFERANT, A DES FORMULATIONS DE PESTICIDES, UNE MEILLEURE EFFICACITE ET/OU UNE MEILLEURE RESISTANCE A L'ENTRAINEMENT PAR LA PLUIE

(30) Priority: 17.12.1993 US 169805; 23.11.1994 US 342271
(43) Date of publication of application: 02.10.1996
(73) Proprietor: MONSANTO COMPANY, St. Louis, Missouri 63167 (US)
(72) Inventor: KASSEBAUM, James, Web, Indianapolis, IN 46256 (US); SANDBRINK, Joseph, Jude, Des Peres, MO 63131 (US); WARNER, James, Michael, University City, MO 63130 (US)
(74) Representative: Bosch, Henry
(86) International application number: US9413671
(87) International publication number: WO9516351

(56) References cited:
- EP-A- 0 290 416
- CA-A- 987 925
- FR-A- 2 589 328
- WEED SCIENCE, vol.25, no.3, May 1977 pages 275 - 287 J.B. WYRILL ET AL. 'Glyphosate toxicity to common milkweed and hemp dogbane as influenced by surfactants.' cited in the application
- MARTIN J. SCHICK (ED.) 'Nonionic Surfactants' 1967 , MARCEL DEKKER , NEW YORK see chapter 4.4.A.1

## Description

### FIELD OF THE INVENTION

This invention comprises a new method of use of relatively low-cost, agriculturally acceptable surfactants to enhance the efficacy or rainfastness of foliar-applied pesticidal and plant growth modifying agents. This invention further comprises new and useful compositions of such agents, in particular the herbicide N-phosphonomethylglycine or its salts or mixtures thereof, containing such efficacy- or rainfastness-enhancing surfactants.

### BACKGROUND OF THE INVENTION

Foliar-applied pesticidal and plant growth modifying chemicals are widely used in agricultural, industrial, recreational and residential areas worldwide. These chemical agents illustratively include insecticides, fungicides, herbicides, plant growth regulators and plant nutrients among other chemicals. Such chemicals are typically applied by spraying on the foliage of vegetation to be protected, controlled, killed or modified, but other methods such as rope-wick application are known. Some of these agents show contact action, killing, controlling or modifying the growth of target organisms at the site of deposition. Other chemicals are systemic, translocating within the plant to a site of action remote from the site of deposition. Still other chemicals show both contact and systemic action.

A common concern with several such chemicals is that efficacy can be reduced if rain falls shortly after spraying or other mode of application. This concern is more pronounced with chemicals that have moderate to high solubility in water. Many methods of overcoming the problem of reduced efficacy due to rain have been disclosed. Such methods are said to have the aim of enhancing "rainfastness" of foliar-applied agents.

Methods to enhance rainfastness include addition to the spray solution of oils or other lipophilic substances, polymers and other materials which are alleged to enhance spreading and sticking of the applied formulation to leaves, and addition of various surfactants. Among surfactants which have been disclosed for rainfastness enhancement are organosilicone copolymers, for example the ethoxylated siloxane Silwet L-77 of Union Carbide Corporation. Such surfactants, as well as other spray additives used to enhance rainfastness, tend to be relatively expensive and many have other drawbacks.

Alternatively, a rainfastness enhancing material may be provided by the manufacturer or supplier of the foliar-applied pesticidal or plant growth modifying agent as an ingredient in the formulation of said agent.

An example of a foliar-applied agent whose efficacy is sensitive to the occurrence of rain shortly after application is the herbicide N-phosphonomethylglycine, also known by its common name glyphosate.

Glyphosate is a highly effective and commercially important herbicide useful for combating the presence of a wide variety of unwanted vegetation, including agricultural weeds. Glyphosate is applied as a formulated product to the foliage of annual and perennial grasses and broadleaf plants and the like, and is taken up over a period of time into the leaves whence it translocates throughout the plant.

Glyphosate in ionic form has relatively high water solubility, especially when formulated as a salt, and during the uptake period immediately after application glyphosate is vulnerable to being washed off the foliage by rain or by overhead watering or irrigation. As glyphosate has practically no herbicidal activity in the soil, its efficacy is seriously reduced by such washing.

The length of time during which glyphosate is somewhat vulnerable to rain depends on many environmental and plant factors, and on the duration and intensity of rain, but can be as short as thirty minutes or as long as twelve hours or more after application. In the great majority of cases rain falling six or more hours after application does not seriously affect performance of the herbicide.

Usually, glyphosate is formulated in commercial compositions in the form of a water-soluble salt. Salts in commercial use include alkylamine salts, such as the isopropylamine salt, alkali metal salts, such as the sodium salt, the ammonium salt and the trimethylsulfonium salt. However, formulations of glyphosate in its acid form are also used. Typical glyphosate salt formulations include aqueous concentrates, requiring simple dilution in water for application by the end-user, and water-soluble or water-dispersible dry formulations, especially granules, requiring dissolution or dispersion in water prior to application. Most formulations, whether liquid or dry, also contain one or more surfactants. Even with such surfactants in the formulation there remains a need for enhanced rainfastness of glyphosate in many situations.

The ethoxylated siloxane surfactant Silwet L-77 referred to above has been the subject of much published research into rainfastness enhancement for glyphosate salt formulations. Its main active ingredient is 1,1,1,3,5,5,5-heptamethyltrisiloxanylpropyl-omega-methoxypoly(ethylene oxide) where the average number of ethylene oxide units is approximately seven. Other siloxanes of related composition are also described in the art. In addition to the high cost of Silwet L-77, common to all siloxanes, a number of disadvantages have been described, notably its tendency to antagonize the activity of glyphosate on some species in the absence of rain. A technical solution to this problem is provided in Australian Patent No. 609,628, wherein a humectant such as glycerin added to the spray solution overcomes the antagonism; however cost still remains a major deterrent in most situations.

A major advance in cost-effective rainfastness enhancement for glyphosate was provided in US Patent No. 5,258,354, wherein acetylenic diol surfactants, exemplified by ethoxylates of 2,4,7,9-tetramethyl-5-decyne-4,7-diol, are shown to give rainfastness at least equal to Silwet L-77 when used in the presence of certain other surfactants, but without the occurrence of antagonism in the absence of rain. Concentrate formulations of glyphosate with such acetylenic diol surfactants are disclosed which are both chemically and physically stable over a wide range of conditions.

While acetylenic diol surfactants are obtainable at much lower cost than effective organosilicone surfactants, they could still be too costly for many applications. In most cases the end-user wishes some degree of insurance against the possibility of rain washing the herbicide off the foliage before it has had time to penetrate into the leaves. The end-user seldom knows that it will certainly rain. For such insurance purposes, economics dictate a still lower-cost adjuvant or formulation ingredient. Various low-cost surfactants have from time to time been claimed to give rainfastness enhancement, including ethoxylated alkylphenols such as octylphenol and nonylphenol ethoxylates. These are among the most widely used general purpose adjuvants for glyphosate in many markets, and are not considered by most users to provide reliable rainfastness enhancement.

E. H. Brumbaugh (Third International Symposium on Adjuvants for Agrochemicals, Cambridge, U.K., August 1992) showed that addition of APSA-80, a product said to contain 80% of a nonionic surfactant based on nonoxynol9 (nonylphenol ethoxylate with an average of 9 moles ethylene oxide per mole of nonylphenol), enhanced rainfastness of glyphosate, applied as Roundup® herbicide in an ultra-low volume of water (30.6 l/ha). The adjuvant was used at concentrations ranging from 0.1% to 0.5% of the spray solution. Rainfastness improvement was not evident on all species.

There is provided herein a new method of use of secondary alcohol alkoxylates of molecular structure defined more particularly below for enhancing the rainfastness of foliar-applied pesticidal and plant growth modifying agents.

There are also provided herein new, storage-stable, liquid or dry concentrate compositions comprising glyphosate or one or more of its salts, a secondary alcohol alkoxylate of molecular structure defined below and one or more other surfactants, said compositions showing enhanced rainfastness by comparison with similar compositions not containing said secondary alcohol alkoxylate, and showing at least equal rainfastness by comparison with much higher-cost compositions of the prior art based on ethoxylated siloxane or acetylenic diol surfactants. Not all alcohol alkoxylates provide the desired degree of rainfastness enhancement. Secondary alcohol alkoxylates, when used in accordance with the present invention, have been shown to give superior rainfastness by comparison with, for example, primary alcohol alkoxylates or alkylphenol alkoxylates of the prior art.

Also provided herein are new, storage-stable, liquid or dry concentrate compositions comprising glyphosate or one or more of its salts, a secondary alcohol alkoxylate of molecular structure defined below and one or more other surfactants, said compositions showing enhanced efficacy by comparison with glyphosate compositions known in the art, even in the absence of rain.

Wyrill and Burnside, Weed Science, Vol. 25 (1977), pp. 275-287, in a wide-ranging study of different classes of surfactant tested two secondary alcohol ethoxylates from Union Carbide Corporation, namely Tergitol 15-S-9 and Tergitol TMN-3, in tank-mix with glyphosate. (The structure given by Wyrill and Burnside for Tergitol TMN-3 does not reveal this to be a secondary alcohol.) When used as the sole surfactant, even at very high use rates, neither of these showed performance (in the absence of rain) comparable to the most efficacious surfactants tested. No motivation is provided to those of skill in the art to evaluate these surfactants further. No suggestion is made or implied in the art that secondary alcohol alkoxylates could be useful for enhancement of glyphosate performance when combined with other surfactants, nor that rainfastness benefits might be obtainable with secondary alcohol alkoxylates.

Among the surfactants used in combination with secondary alcohol alkoxylates in compositions of the present invention are ethoxylated tertiary and quaternary alkylamines and alkylamine oxides.

It is known in the art that ethoxylated alkylamine or alkylamine oxide surfactants having an average alkyl chain length in the range from 10 to 20 carbon atoms and having an average of from 2 to 20 moles of ethylene oxide (EO) per mole of amine, are effective in potentiating the herbicidal activity of glyphosate compositions. European Patent No. 0 290 416, for example, discloses glyphosate compositions containing tertiary alkylamine surfactants within the range encompassed by the above description, and notes that such compositions, particularly those with EO levels in the lower part of the range mentioned above, have high herbicidal unit activity. European Patent No. 0 274 369 discloses highly efficacious glyphosate compositions containing quaternary alkylamine surfactants within the range encompassed by the above description. In both cases it is disclosed that for best performance the compositions should also contain a significant amount of an inorganic ammonium salt such as ammonium sulfate.

US Patent No. 5,118,444 discloses ethoxylated alkylamine oxide surfactants within the range encompassed by the above description, and indicates their usefulness as components of glyphosate formulations.

Ammonium sulfate is bulky and can only be accommodated in a concentrate formulation at an effective level by greatly lowering the content of active ingredient, in this case glyphosate. A significant advance in the art of formulating glyphosate concentrates would result from identification of a material which further enhances the efficacy of compositions containing ethoxylated alkylamine surfactants, but which is effective at a lower concentration than is required in the case of ammonium sulfate. That material could be incorporated in a concentrate formulation without unacceptable dilution of the glyphosate active ingredient. The present invention provides just such an advance in the art.

CA-A-987 925 (cf. Page 9 lines 8 to 21) describes the use of trimethylnonyl polyethylene glycol (6 mols) ether to reduce the surface tension of foliar-applied herbicidal compositions. By reducing the surface tension of the compositions, the herbicide is more readily taken up by the leaves (cf. Page 8 line 18 to page 9 line 7) thereby being less susceptible to washing off by a subsequent rainfall.

FR-A-2 589 328 discloses the addition of a secondary alcohol surfactant to glyphosate in order to increase the uptake of glyphosate by the leaves.

According to Weed Science, vol. 25, No. 3, 1997, pages 275-287, the effectiveness of glyphosate formulations containing nonionic ether ethoxylate surfactants can be improved by addition of dimethyl amine or quaternary ammonium surfactants (cf. Table 3).

EP-A-0 290 416 describes compositions comprising glyphosate and an alkoxylated alkylamine surfactant possibly together with secondary surfactants such as polyoxyethylene ethers or esters, and/or with ammonium sulphate.

### SUMMARY OF THE INVENTION

There are provided new, storage-stable, liquid or dry concentrate compositions comprising (a) glyphosate or one or more of its agriculturally acceptable salts, (b) one or more secondary alcohol surfactants such as those having the representative chemical structure 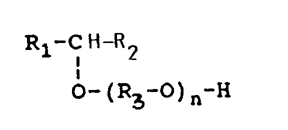 wherein R₁ and R₂ are independently straight or branched chain C₁ to about C₂₈ alkyl, aryl or alkylaryl groups and the total number of carbon atoms in R₁ and R₂ is about 7 to about 30, R₃ groups are independently C₁ to C₄ alkylene groups and n is an average number from about 3 to about 30, and (c) one or more other surfactants selected from alkyl monoglycosides, alkyl polyglycosides, sucrose alkylesters, tertiary or quarternary alkylamine alkoxylates, non-alkoxylated tertiary or quarternary alkylamines, alkylamine oxides, or alkylbetaines.

In preferred compositions, R₃ in the structure of the alcohol surfactant is ethylene.

Compositions of the invention possess at least one of the following benefits over compositions known in the art. (1) They may show enhanced rainfastness by comparison with similar compositions not containing said secondary alcohol surfactants, and at least substantially equal rainfastness by comparison with much higher-cost compositions of the prior art based on ethoxylated siloxane or acetylenic diol surfactants. (2) They may show enhanced herbicidal efficacy, even in the absence of rain, by comparison with similar compositions not containing said secondary alcohol surfactants.

A method of use of such compositions to provide acceptable control of weeds and other unwanted vegetation whether or not rain falls shortly after application is also provided.

### DETAILED DESCRIPTION OF THE INVENTION

In the most widely used commercial glyphosate compositions, the herbicide glyphosate is formulated as its isopropylamine salt. Excellent control of most plant species can normally be obtained at rates of 0.1 to 10 kg/ha of glyphosate-isopropylamine. It is generally preferred to refer to the amount of glyphosate applied in terms of glyphosate acid equivalent, conventionally abbreviated as "a.e.". Application to plants is most commonly done by spraying a solution of the glyphosate herbicide in water.

For most applications, the efficacy of glyphosate is significantly improved by the presence of a surfactant. However, not all surfactants are equally effective in improving the herbicidal activity of glyphosate, and some surfactants are quite ineffective or may even reduce glyphosate activity. Among the most effective prior art surfactants for improving glyphosate activity are alkoxylated alkylamine surfactants, including both tertiary and quaternary amine types. Nonionic surfactants differ widely and to a large extent unpredictably in their ability to enhance glyphosate activity. The secondary alcohol alkoxylates of the present invention are relatively weak in this regard, when used as the sole surfactant.

Most commercial glyphosate salt formulations already contain one or more surfactants, most commonly of the tertiary or quaternary alkylamine alkoxylate class mentioned above. For example, Roundup® herbicide of Monsanto Company is an aqueous concentrate formulation of the isopropylamine salt of glyphosate. In addition to glyphosate in the amount of 360 grams a.e./liter, Roundup herbicide as sold, for example, in the U.S. contains a surfactant based on ethoxylated tallowamine having an average of about 15 moles EO per mole of amine.

The end-user may add more surfactant to a glyphosate spray solution; as well as amines, low-cost nonionic surfactants of the ethoxylated primary alcohol, alkylphenol or fatty acid classes are especially widely used in this way. However, because of the wide variation in efficacy of such surfactants it is generally preferred to include an effective surfactant in the concentrate formulation. In addition to the relatively poor efficacy of secondary alcohol alkoxylates when used as the sole surfactant with glyphosate, these alcohol surfactants suffer the further drawback that they cannot be formulated with glyphosate salts in agriculturally useful amounts in aqueous concentrates, except in the presence of compatibilizing agents. Such agents include a wide variety of tertiary and quaternary amine surfactants, alkyl polyglycosides and other materials.

There are now provided new, storage-stable, liquid or dry concentrate compositions comprising (a) glyphosate or one or more of its agriculturally acceptable salts, (b) one or more secondary alcohol surfactants such as those having the representative chemical structure 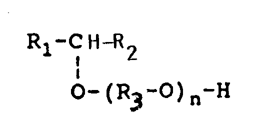 wherein R₁ and R₂ are independently straight or branched chain C₁ to about C₂₈ alkyl, aryl or alkylaryl groups and the total number of carbon atoms in R₁ and R₂ is about 7 to about 30, R₃ groups are independently C₁ to C₄ alkylene groups and n is an average number from about 3 to about 30, and (c) one or more other surfactants selected from alkyl monoglycosides, alkyl polyglycosides, sucrose alkylesters, tertiary or quaternary alkylamine alkoxylates, non-alkoxylated tertiary or quaternary alkylamines, alkylamine oxide, or alkylbetaines, said compositions showing enhanced efficacy and/or rainfastness by comparison with similar compositions not containing said secondary alcohol surfactants, and showing at least substantially equal efficacy and/or rainfastness by comparison with much higher-cost compositions of the prior art based on ethoxylated siloxane or acetylenic diol surfactants.

A method of use of such compositions to provide acceptable control of weeds and other unwanted vegetation whether or not rain falls shortly after application is also provided.

A particular embodiment of this invention involves the use of a surfactant composition comprising (a) an secondary alcohol surfactant in which R₁ and R₂ are straight chain alkyl groups with a total of about 10 to about 20 carbon atoms, R₃ is ethylene and n is an average number in the range from about 7 to about 14, most preferably from about 9 to about 12; and (b) an ethoxylated tertiary or quaternary alkylamine or alkylamine oxide surfactant having an average of from about 2 to about 20 moles of ethylene oxide per mole of amine. Said surfactant composition may be coformulated with a glyphosate herbicide in an aqueous or dry concentrate formulation. Alternatively, said surfactant composition may be provided to the end user separately from the glyphosate herbicide, for tank mixing by him immediately prior to application.

Typically in commercial preparations of straight chain secondary alcohol surfactants the ethoxylated alcohol group can be located anywhere on the alkyl chain except at the ends, and such preparations are therefore mixtures of alcohols. The alkyl chain length also normally varies within commercial preparations.

In the examples that follow, one such preparation is referred to as C₁₁₋₁₅ secondary alcohol 9EO". This product has a total of about 11 to about 15 carbon atoms in the alkyl chain and an average of about 9 moles ethylene oxide per mole of alcohol (n=9). C₁₁₋₁₅ secondary alcohol ethoxylates such as this are commercially available from Union Carbide Corporation as the Tergitol 15-S series.

Another surfactant which has been found useful according to the present invention is a C₁₂ branched chain secondary alcohol ethoxylate. Surfactants of this type are commercially available from Union Carbide Corporation as the Tergitol TMN series. An example is referred to herein as "C₁₂ branched secondary alcohol 10EO". This product comprises 2, 4, 6, 8-trimethyl-4-nonanol with an average of about 10 moles ethylene oxide per mole of alcohol (n=10).

To provide the desired rainfastness enhancement of a foliar applied pesticidal or plant growth modifying agent, secondary alcohol alkoxylates of the invention may be used at concentrations in the spray solution in the range from about 0.05 to about 2 per cent by volume, preferably from about 0.1 to about 1 per cent by volume, although in certain circumstances greater or lesser concentrations may be used.

In concentrate or ready-to-use glyphosate formulations, the secondary alcohol alkoxylate surfactant may usefully be included at weight/weight ratios of said surfactant to glyphosate a.e. from about 1:20 to about 1:1, preferably from about 1:12 to about 1:2 and most preferably from about 1:6 to about 1:3.

In ready-to-use formulations, glyphosate is typically present at about 0.5 to about 2 per cent a.e. by weight. Aqueous concentrate formulations of the invention may contain about 5 to about 40 per cent glyphosate a.e. by weight.

Dry concentrate formulations of the invention may contain about 10 to about 75 per cent glyphosate a.e. by weight. Preferred dry concentrate formulations are water-soluble granules containing about 40 to about 70 per cent glyphosate a.e. by weight.

Preferred glyphosate salts for use in aqueous or dry formulations of the invention include ammonium, alkylamine, for example isopropylamine, alkylsulfonium, for example trimethylsulfonium, and alkali metal salts. Most commonly these salts have a molar ratio of cations to glyphosate anions in the range from about 1:1 to about 2:1.

Long-term shelf stability is an important commercial attribute of concentrate formulations of pesticidal and plant growth modifying agents. In the case of aqueous concentrate formulations, such as those of glyphosate, it is particularly important that surfactants in the formulation do not separate from the other ingredients as a distinct phase. Many such aqueous concentrates show a tendency for phase separation at high temperatures. The minimum temperature at which such phase separation occurs is known as the "cloud point" of the formulation. It is well known to those of skill in the art that most nonionic surfactants, ethoxylated alcohols being a good example, have rather poor compatibility with high ionic strength solutions such as aqueous concentrate formulations of glyphosate salts. This poor compatibility is manifested as a low cloud point, leading to unacceptably poor shelf stability of the formulation.

In accordance with the present invention secondary alcohol alkoxylates are incorporated at useful levels in an aqueous concentrate formulation of glyphosate salt by further including in the formulation a compatibilizing agent which raises the cloud point of the formulation to an acceptable level, for example 50°C or higher.

In both aqueous and dry concentrate glyphosate formulations where rainfastness enhancement is desired, additional surfactant(s) should be included in an amount sufficient to provide acceptable herbicidal efficacy in the absence of rain, and to allow the secondary alcohol alkoxylate to exhibit the desired level of rainfastness enhancement.

The amount of such additional surfactant other than secondary alcohol alkoxylate to be included depends greatly on the chemical composition of that surfactant, on the plant species targeted and on environmental factors. Normally, however, the weight/weight ratio of secondary alcohol alkoxylate to the total of other surfactants is in the range from about 1:20 to about 5:1, preferably from about 1:10 to about 2:1 and most preferably from about 1:5 to about 1:1.

The surfactant(s) additional to secondary alcohol alkoxylates in glyphosate compositions of the invention are selected from alkyl monoglycosides, alkyl polyglycosides, sucrose alkylesters, tertiary or quaternary alkylamine alkoxylates, non-alkoxylated tertiary or quaternary alkylamines, alkylamine oxides, alkylbetaines and the like. Good results have been obtained, for example, with cocoamine 2EO and 5EO (e.g. Ethomeen C/12 and C/15, Akzo Chemicals Inc.), N-methyltallowammonium chloride 5EO, 10EO and 15EO, N-methyloctadecylammonium chloride 15EO (e.g. Ethoquad 18/25, Akzo Chemicals Inc.), N-methylcocoammonium chloride 2EO (formulated at 35% concentration in water as Ethoquad C/12W, Akzo Chemicals Inc.), N-methylcocoammonium chloride 15EO (e.g. Ethoquad C/25, Akzo Chemicals Inc.), N,N-diethyl-N-methylammonium chloride 1EO + 7PO (Emcol CC-9, Witco Corporation), N,N-dimethyldodecylamine (Armeen DM12D, Akzo Chemicals Inc.), N,N,N-trimethylcocoammonium chloride (formulated at 33% concentration in water as Arquad C-33W, Akzo Chemicals Inc.), N,N,N-trimethyltallowammonium chloride (formulated at 27% concentration in water as Arquad T-27W, Akzo Chemicals Inc.), potassium laurylbetaine, alkyl polyglucosides (Agrimul PG 2067 and Agrimul PG 2069, Henkel Corporation), C₈₋₁₀ alkyl monoglucoside, and sucrose cocoate (Crodesta SL-40, Croda Inc.).

Several of the Examples herein utilize N-methylcocoammonium chloride with 2 moles ethylene oxide ("cocoamine quat 2EO") as the additional surfactant. Other Examples herein utilize tertiary cocoamine or tallowamine with 5 moles ethylene oxide ("cocoamine 5EO" or "tallowamine 5EO" respectively) as the additional surfactant.

In addition to glyphosate or its salts, the secondary alcohol alkoxylate and the additional surfactant(s), any of a variety of further ingredients or adjuvants may be included in formulations of the present invention as long as such added materials are not significantly antagonistic to the glyphosate herbicidal activity and/or to the secondary alcohol alkoxylate efficacy- and/or rainfastness-enhancing activity. Mixtures of glyphosate with other herbicides are also within the scope of the present invention. Examples of such other herbicides include bialaphos, glufosinate, 2,4-D, MCPA, dicamba, diphenylethers, imidazolinones and sulfonylureas.

Methods of use of some glyphosate formulations are well known to those of skill in the art. Aqueous concentrate formulations of the invention are diluted in an appropriate volume of water and applied, for example by spraying, to the weeds or other unwanted vegetation to be killed or controlled. Dry concentrate formulations of the invention are dissolved or dispersed in an appropriate volume of water and applied in the same way.

The present invention is illustrated by but not limited to the following Examples. In describing concentrate compositions of the Examples, percentages are given by weight unless otherwise indicated. In describing concentrations of surfactants in spray solutions, percentages are given by volume.

### EXAMPLES

Comparative herbicidal activity with and without simulated rain was determined in greenhouse and field tests. For greenhouse tests, seeds or propagules of selected species were planted in 10.2 cm square pots of soil with added fertilizer. Temperature and relative humidity were allowed to fluctuate within limits defined for each test described in the following Examples. Plants were allowed to grow until the desired growth stage or size (defined for each test) for spraying. Pots were selected for uniformity before treatment and three replicate pots were assigned to each treatment. Spray solutions were prepared by dilution or dissolution of concentrate herbicide formulations in water. When desired to test "tank mix" application of surfactant compositions, these were added to the spray solution at the required concentration. Spraying was performed with a device which simulates agricultural field spraying equipment, delivering a fine spray at a pressure of about 207 kilopascals. Speed of travel of the spray device over the plants was adjusted to give the desired spray volume (defined for each test). For logistical reasons, all three replicates of each treatment were sprayed together. "Rain" treatments were applied by repeated passage of a coarse spray of water over the plants at some desired period of time after herbicide spraying. The amount and duration of "rain" were noted. After spraying and "rain" treatment, the plants were returned to the greenhouse. Herbicidal efficacy was evaluated by visual assessment at one or more selected time periods after treatment and recorded as "percent control" on an arbitrary scale by comparison with untreated plants. On this scale 0 means no visible effect and 100 means death of all plants. In the Examples, percent control values given are the means of three replicates.

In field tests, treatments were applied post-emergence to plants which had grown naturally or from seeds planted mechanically in rows. A randomized block design with three replicates was used, with plot size depending on local circumstances. A backpack sprayer with multiple nozzles giving an overlapping spray pattern was used to maximize uniformity of application. "Rain" was simulated by means of overhead irrigation equipment tested for uniformity of deposition of water. Percent control was evaluated in similar fashion to that described above for greenhouse tests.

### Example 1

The following surfactant adjuvants were tested for rainfastness enhancement of glyphosate in a field trial:

### Prior Art

1. Triton AG-98
2. 2,4,7,9-tetramethyl-5-decyne-4,7-diol 10EO

### Invention

3. C₁₁₋₁₅ secondary alcohol 9EO
4. Adjuvant 3 + cocoamine quat 2EO (1:1 ratio)
In this and other Examples, a number followed by "EO" refers to the average moles of ethylene oxide per mole of surfactant.

Glyphosate was applied as the isopropylamine salt, either without surfactant (the glyphosate formulation sold as Accord® herbicide by Monsanto Company) or with a surfactant based on tallowamine ethoxylate (the glyphosate formulation sold as Roundup® herbicide by Monsanto Company). Triton AG-98 (Union Carbide Corporation) is a widely used low foam commercial agricultural adjuvant, 80% of which is octylphenol ethoxylate.

A total of 11 grass and broadleaf species were planted in rows:
A. Panicum dichotomiflorum (fall panicum, PANDI)
B. Lolium sp. (annual ryegrass, LOLSS)
C. Bromus tectorum (downy brome, BROTE)
D. Sorghum vulgare. (grain sorghum cv. Rox Orange, SORGR)
E. Echinochloa crus-galli var. frumentae (Japanese millet, ECHCF)
F. Echinochloa crus-galli (barnyardgrass, ECHCG)
G. Setaria faberi (giant foxtail, SETFA)
H. Abutilon theophrasti (velvetleaf, ABUTH)
I. Chenopodium album (common lambsquarters, CHEAL)
J. Kochia scoparia (kochia, KCHSC)
K. Salsola kali (Russian thistle, SASKR)

All applications were made at a spray volume of 93.5 l/ha (10 gallons/acre). To minimize variation in rain-free period, all plots were sprayed within 15 minutes. Rain was simulated by overhead irrigation using an array of fixed sprinklers, which were turned on 60 minutes after the midpoint of the 15-minute glyphosate application period. The sprinklers were left on for 60 minutes, targeting a "rainfall" of at least 12 mm (0.5 inch). Gauges located throughout the experimental area showed that the actual amount of "rain" delivered varied from 11 to 18 mm, with a mean of 14.5 mm.

Data in Table 1 show percent inhibition as recorded 15 days after treatment (DAT) with glyphosate at the rate of 0.28 kg a.e./ha (0.25 lb a.e./acre), without and with "rain" as described above. For all "rain" treatments the adjuvants were applied at a concentration of 0.25% in the spray solution. For the "no rain" treatments, adjuvant 4 was applied at 0.25%, but the other adjuvants were applied, through operator error, at 0.125%. This error does not affect any of the conclusions drawn below from this test.

**Table 1**

| Percent inhibition 15 DAT without and with simulated rain (means of 3 replicates). Adjuvants 1-4 and species A-K as defined in text. | | | | | | | | | | | | | |
|---|---|---|---|---|---|---|---|---|---|---|---|---|---|
| Glyphosate Product | Adjuvant | Rain | Species | | | | | | | | | | |
| | | | A | B | C | D | E | F | G | H | I | J | K |
| Roundup® | none | no | 86 | 96 | 98 | 95 | 67 | 53 | 100 | 88 | 90 | 81 | 62 |
| | | yes | 8 | 28 | 20 | 32 | 22 | 12 | 84 | 32 | 10 | 12 | 10 |
| Roundup® | 1 | no | 87 | 100 | 100 | 88 | 73 | 68 | 100 | 80 | 92 | 80 | 91 |
| | | yes | 13 | 37 | 42 | 48 | 28 | 15 | 96 | 33 | 28 | 17 | 18 |
| Roundup® | 2 | no | 82 | 100 | 100 | 90 | 85 | 72 | 100 | 88 | 94 | 88 | 75 |
| | | yes | 20 | 50 | 50 | 58 | 40 | 15 | 98 | 40 | 38 | 30 | 33 |
| Roundup® | 3 | no | 85 | 89 | 100 | 94 | 83 | 80 | 100 | 79 | 92 | 87 | 87 |
| | | yes | 20 | 57 | 75 | 56 | 37 | 25 | 96 | 38 | 42 | 20 | 20 |
| Roundup® | 4 | no | 96 | 99 | 100 | 99 | 84 | 77 | 100 | 73 | 93 | 90 | 77 |
| | | yes | 18 | 48 | 73 | 57 | 35 | 15 | 94 | 42 | 37 | 25 | 28 |
| Accord® | 4 | yes | 13 | 59 | 58 | 67 | 42 | 22 | 98 | 42 | 37 | 25 | 28 |

The results of this test show Adjuvant 3 of the invention to provide significant rainfastness enhancement of Roundup. While not giving complete rainfastness under the severe conditions of this test, the use of Adjuvant 3 nevertheless gave greater enhancement of rainfastness than Triton AG-98 (Adjuvant 1 of the prior art) and was at least as effective overall as 2,4,7,9-tetramethyl-5-decyne-4,7-diol 10EO (Adjuvant 2 of the prior art) which is a much higher-cost material. Adjuvant 4 of the invention provided a similar degree of rainfastness enhancement to Adjuvant 3 of the invention, and when added to the surfactantless product Accord gave similar performance with "rain" as when added to the surfactant-containing product Roundup.

### Example 2

Aqueous concentrate formulations of the isopropylamine salt of glyphosate were prepared at a glyphosate a.e. loading of 31% (equivalent to about 360 g a.e./liter). All contained 3.5% cocoamine quat 2EO. Secondary alcohol ethoxylates of the invention were included at a range of levels and cloud point of the formulation was determined. To measure cloud point, a sample of each formulation in a test tube was heated in a water bath until it became cloudy. The test tube was then removed from the water bath and the sample stirred with a thermometer until it became clear. The temperature at which the sample became clear was recorded as the cloud point of the formulation. Results are shown in Table 2.

**Table 2**

| Cloud points (°C) of glyphosate formulations containing 3.5% cocoamine quat 2EO plus various levels of secondary alcohol ethoxylates illustrative of this invention. | | | | | | | | |
|---|---|---|---|---|---|---|---|---|
| secondary alcohol | % 2° or 3° alcohol in formulation | | | | | | | |
| | 1 | 2 | 3 | 4 | 5 | 6 | 7 | 8 |
| C₁₁₋₁₅ 3EO | >95 | <25 | <25 | <25 | | | | |
| C₁₁₋₁₅ 5EO | >95 | >95 | >95 | >95 | <25 | | | |
| C₁₁₋₁₅ 7EO | >95 | >95 | >95 | >95 | >95 | <25 | <25 | |
| C₁₁₋₁₅ 9EO | >95 | >95 | >95 | >95 | 89 | 81 | 32 | <25 |
| C₁₁₋₁₅ 12EO | >95 | >95 | 88 | 77 | 67 | 56 | | |
| C₁₁₋₁₅ 15EO | | 86 | 71 | 57 | 42 | 35 | | |
| C₁₂ branched 6EO | | | | >95 | >95 | <25 | <25 | |
| C₁₂ branched 10EO | | | | >95 | 80 | 72 | 65 | |

The data for C₁₁₋₁₅ secondary alcohols show a strong relationship between the EO level on the alcohol and the ability of cocoamine quat 2EO to solubilize the alcohol. Acceptable cloud points (>50°C) are obtained at up to 6% C₁₁₋₁₅ secondary alcohol 9EO in the formulation, when cocoamine quat 2EO is present at 3.5%.

### Example 3

Aqueous concentrate formulations of the isopropylamine salt of glyphosate were prepared at the same glyphosate a.e. loading as in Example 2, but containing higher levels of cocoamine quat 2EO. Secondary alcohol ethoxylates of the invention were included at a range of levels and cloud point of the formulation was determined by the same procedure as in Example 2. Results are shown in Tables 3 and 4.

**Table 3**

| Cloud points (°C) of glyphosate formulations illustrative of this invention containing 5% cocoamine quat 2EO plus various levels of secondary alcohol ethoxylates. | | | | |
|---|---|---|---|---|
| secondary alcohol | % secondary alcohol | | | |
| | 5 | 6 | 7 | 8 |
| C₁₁₋₁₅ 7EO | >95 | >95 | >95 | <26 |
| C₁₁₋₁₅ 9EO | >95 | 87 | 81 | 75 |
| C₁₁₋₁₅ 12EO | 76 | 69 | 58 | 48 |
| C₁₂ branched 6EO | >95 | <25 | <25 | <25 |
| C₁₂ branched 10EO | 80 | 68 | 65 | 61 |

**Table 4**

| Cloud points (°C) of glyphosate formulations illustrative of this invention containing 7% cocoamine quat 2EO plus various levels of secondary alcohol ethoxylates. | | | | | | | |
|---|---|---|---|---|---|---|---|
| secondary alcohol | % secondary alcohol | | | | | | |
| | 5 | 6 | 7 | 8 | 9 | 10 | 11 |
| C₁₁₋₁₅ 7EO | | | >95 | >95 | <26 | <26 | |
| C₁₁₋₁₅ 9EO | | | 85 | 80 | 70 | 65 | |
| C₁₁₋₁₅ 12EO | 80 | 78 | 66 | 58 | 51 | 42 | 36 |

The data show that acceptable cloud points (>50°C) are obtained at up to at least 8% C₁₁₋₁₅ secondary alcohol 9EO in the formulation when cocoamine quat 2EO is present at 5%, and up to at least 11% of this same secondary alcohol in the formulation when cocoamine quat 2EO is present at 7%.

### Example 4

Aqueous concentrate formulations of the isopropylamine salt of glyphosate were prepared at a glyphosate a.e. loading of 18.4% (equivalent to about 200 g a.e./liter). All contained 7% cocoamine quat 2EO and 10.2% nonionic surfactant. Formulations of the present invention contained as the nonionic one of several secondary alcohol ethoxylates; other formulations were made containing nonionics such as Silwet L-77, 2,4,7,9-tetramethyl-5-decyne-4,7-diol 10EO, nonylphenol 8EO, 10EO and 12EO and C₁₂₋₁₅ primary alcohol 7EO, 9EO and 12EO. These formulations were tested for rainfastness in a greenhouse test.

The test species was Panicum maximum (guineagrass, PANMA). All glyphosate formulations were applied at 1.68 kg a.e./ha (1.5 lb a.e./acre) in a spray volume of 185 l/ha (20 gallons/acre). Commercial Roundup herbicide was included as a standard. Simulated rain was applied in the amount of 6 mm over a period of 15 minutes, beginning 1 hour after glyphosate treatment. Data on percent inhibition without and with "rain" are presented in Table 5.

**Table 5**

| Percent inhibition of guineagrass 15 DAT without and with simulated rain (means of 3 replicates). | | |
|---|---|---|
| | No rain | Rain |
| Roundup® herbicide (standard) | 100 | 65 |

| Nonionic in formulation: Prior Art: | | |
|---|---|---|
| Silwet L-77 | 100 | 70 |
| 2,4,7,9-tetramethyl-5-decyne-4,7-diol 10EO | 98 | 94 |
| nonylphenol 8EO | 100 | 97 |
| nonylphenol 10EO | 100 | 81 |
| nonylphenol 12EO | 100 | 63 |
| C₁₂₋₁₅ primary alcohol 7EO | 99 | 90 |
| C₁₂₋₁₅ primary alcohol 9EO | 98 | 81 |
| C₁₂₋₁₅ primary alcohol 12EO | 99 | 68 |

| Invention: | | |
|---|---|---|
| C₁₁₋₁₅ secondary alcohol 7EO | 100 | 89 |
| C₁₁₋₁₅ secondary alcohol 9EO | 100 | 99 |
| C₁₁₋₁₅ secondary alcohol 12EO | 100 | 86 |
| C₁₁₋₁₅ secondary alcohol 15EO | 99 | 80 |
| C₁₂ branched secondary alcohol 6EO | 100 | 66 |
| C₁₂ branched secondary alcohol 10EO | 100 | 98 |

In this test, acceptable performance (>85% inhibition) with rain was obtained with 2,4,7,9-tetramethyl-5-decyne-4,7-diol 10EO of the prior art, and with two lower cost materials, nonylphenol 8EO and C₁₂₋₁₅ primary alcohol 7EO, likewise outside the scope of the present invention. It will be noted that even a slight increase in the EO level on either the nonylphenol or the primary alcohol significantly reduced the rainfastness of the formulation; at the 12EO level no rainfastness advantage at all was obtained with either of these surfactant types. By contrast, C₁₁₋₁₅ secondary alcohol surfactants of the invention gave enhanced rainfastness over a wide range of EO levels. Of the C₁₂ branched secondary alcohol surfactants tested, the 10EO example gave excellent rainfastness while the 6EO example did not give significant rainfastness enhancement in this test.

### Example 5

Aqueous concentrate formulations of the isopropylamine salt of glyphosate were prepared at a glyphosate a.e. loading of 31% (equivalent to about 360 g a.e./liter). All contained 7.5% cocoamine quat 2EO and 8.6% nonionic surfactant. Formulations of the present invention contained as the nonionic C₁₁₋₁₅ secondary alcohol 9EO or C₁₂ branched secondary alcohol 10EO; for comparison, other formulations were made containing nonionics disclosed as rainfastness aids in the prior art such as 2,4,7,9-tetramethyl-5-decyne-4,7-diol 10EO or nonylphenol 8EO. These formulations were tested for rainfastness in a greenhouse test.

The test species was Elymus repens (quackgrass, AGRRE). All glyphosate formulations were applied at both 0.84 and 1.68 kg a.e./ha (0.75 and 1.5 lb a.e./acre) in a spray volume of 20 gallons/acre (187 l/ha. Commercial Roundup herbicide was included as a standard. Simulated rain was applied in the amount of 6 mm over a period of 15 minutes, beginning 1 hour after glyphosate treatment. Data on percent inhibition without and with "rain" are presented in Table 6.

**Table 6**

| Percent inhibition of quackgrass 28 DAT without and with simulated rain (means of 3 replicates). | | | | |
|---|---|---|---|---|
| Application rate kg a.e./ha | 0.84 | | 1.68 | |
| | No rain | Rain | No rain | Rain |
| Roundup (standard) | 73 | 30 | 92 | 72 |

| Nonionic in formulation: | | | | |
|---|---|---|---|---|
| 2,4,7,9-tetramethyl-5-decyne-4,7-diol 10EO | 94 | 78 | 98 | 94 |
| nonylphenol 8EO | 97 | 83 | 98 | 79 |
| C₁₁₋₁₅ secondary alcohol 9EO | 93 | 96 | 100 | 98 |
| C₁₂ branched secondary alcohol 10EO | 94 | 84 | 100 | 88 |

At the lower glyphosate rate, both formulations of the present invention gave better rainfastness than the formulation of the prior art containing 2,4,7,9-tetramethyl-5-decyne-4,7-diol 10EO, and the formulation of the invention containing C₁₁₋₁₅ secondary alcohol 9EO gave better rainfastness than either of the prior art formulations. At the higher glyphosate rate, both formulations of the present invention gave better rainfastness than the formulation of the prior art containing nonylphenol 8EO, and gave comparable rainfastness to the much higher cost formulation containing 2,4,7,9-tetramethyl-5-decyne-4,7-diol 10EO.

Considering Examples 4 and 5 together, it is clear that C₁₁₋₁₅ secondary alcohol 9EO and C₁₂ branched secondary alcohol 10EO of the present invention are more consistent in their rainfastness enhancing performance than nonylphenol ethoxylates of the prior art.

### Example 6

The following glyphosate formulations were tested for herbicidal activity and rainfastness by comparison with Roundup® herbicide in a field trial:
Formulation A (representative of the prior art): 31% glyphosate a.e. as the isopropylamine salt, 7.5% cocoamine quat 2EO, 8.6% nonylphenol 8EO.
Formulation B (representative of the present invention): 31% glyphosate a.e. as the isopropylamine salt, 7.5% cocoamine quat 2EO, 8.6% C11-15 secondary alcohol 9EO.

A total of 7 grass and broadleaf species were planted in rows:
L. Digitaria ciliaris (southern crabgrass, DIGSP)
M. Brachiaria platyphylla (broadleaf signalgrass, BRAPP)
N. Sorghum halepense (johnsongrass, SORHA)
O. Echinochloa crus-galli (barnyardgrass, ECHCG)
P. Sida spinosa (prickly sida, SIDSP)
Q. Echinochloa crus-galli var. frumentae (Japanese millet, ECHCF)
R. Sesbania exaltata (hemp sesbania, SEBEX)

All applications were made at a spray volume of 93.5 l/ha (10 gallons/acre). To minimize variation in rain-free period, all plots were sprayed within 15 minutes. Rain was simulated by overhead irrigation using a lateral move irrigation system, which was turned on 60 minutes after the midpoint of the 15-minute glyphosate application period to give a "rainfall" of approximately 12 mm (0.5 inch).

Data in Table 7 show percent inhibition as recorded 21 days after treatment (DAT) with glyphosate at the rate of 0.84 kg a.e./ha (0.75 lb a.e./acre), without and with "rain" as described above.

**Table 7**

| Percent inhibition 21 DAT without and with simulated rain (means of 3 replicates). Formulations A and B and species L-R as defined in text. | | | | | | | | |
|---|---|---|---|---|---|---|---|---|
| Formulation | Rain | Species | | | | | | |
| | | L | M | N | O | P | Q | R |
| Roundup (standard) | no | 98 | 95 | 99 | 86 | 75 | 90 | 77 |
| | yes | 65 | 57 | 86 | 52 | 65 | 78 | 68 |
| A (prior art) | no | 100 | 93 | 99 | 87 | 77 | 89 | 69 |
| | yes | 79 | 70 | 93 | 62 | 68 | 82 | 75 |
| B (invention) | no | 100 | 92 | 95 | 79 | 73 | 89 | 72 |
| | yes | 87 | 75 | 96 | 68 | 77 | 84 | 82 |

### Examples 7-8

In Examples 7 and 8, a short-term whole plant assay was used to evaluate relative efficacy of aqueous glyphosate compositions containing tallowamine 5EO and C₁₁₋₁₅ secondary alcohol 9EO in different concentrations and proportions relative to one another.

Equal volumes of uniformly sized seeds (20-25 in number) of barley cv. Pennco were sown in a growing medium consisting of a 3:2:1 sand/soil/peat mixture in 4 inch square plastic pots. Pots were placed in a controlled environment growth chamber providing a 14 hour photoperiod, day and night temperatures of 78°F and 66°F respectively, and a relative humidity in the range from 30% to 50%. Light was provided by a combination of metal halide and sodium vapor lamps. All pots were bottom watered at 1200 hr on the first day, resulting in rapid saturation of the growing medium. Seedling emergence occurred on the third and fourth days. On the seventh day, all pots were fertilized by bottom watering with a Peters 20-20-20 fertilizer containing 475 ppm soluble nitrogen.

On the eighth day, pots were sorted into 6 replicate blocks according to plant size. Treatments, including no-treatment controls, were randomly assigned within each block, one treatment per pot.

Plants were treated with glyphosate compositions in rapid succession between 0830 hr and 0900 hr on the ninth day, when average plant height was 13-15 cm and the second leaf was just beginning to elongate. Compositions were applied using a calibrated single-nozzle track sprayer delivering 187 l/ha through a Teejet 8001E nozzle at 276 kilopascals. Plants were removed from the growth chamber immediately before treatment and returned to the same growth chamber immediately after treatment. Pots were spatially arranged in a randomized complete block experimental design. At 6 hours after treatment plants in all pots were trimmed by cutting to 20 mm above the top edge of the pot. This removed approximately 90% of the barley leaf area. Pots were bottom watered once daily for the remainder of the study. Data collection took place on the sixteenth day, 7 days after treatment.

Average height of barley regrowth in each pot was measured to the nearest 5 mm increment, from the earlier cutting height 20 mm above the edge of the pot. All plants in each pot were then cut at 20 mm above the edge of the pot and total fresh weight was recorded.

### Example 7

All compositions in this Example contained glyphosate as the isopropylamine salt at a concentration calculated to deliver 0.42 kg a.e./ha. Polyoxyethylene tallowamine 5EO (T/Am 5) concentration was varied independently of C₁₁₋₁₅ secondary alcohol 9EO (S/Al 9) concentration as will be clear from the tables below. Untreated plants had a mean regrowth height of 175 mm.

| Mean height of regrowth (mm) | | | | | | |
|---|---|---|---|---|---|---|
| T/Am 5 (% w/v) | S/Al 9 (% w/v) | | | | | |
| | 0 | 0.15 | 0.3 | 0.45 | 0.6 | 0.75 |
| 0 | 148 | 101 | 112 | 124 | 120 | 122 |
| 0.05 | 149 | 52 | 39 | 51 | 55 | 66 |
| 0.1 | 64 | 51 | 49 | 51 | 60 | 63 |
| 0.15 | 65 | 53 | 50 | 47 | 46 | 52 |
| 0.2 | 58 | 50 | 45 | 52 | 54 | 52 |
| 0.25 | 57 | 47 | 45 | 43 | 47 | 42 |
| Least significant difference (P=0.05) 15 | | | | | | |

| Mean fresh weight of regrowth (g) | | | | | | |
|---|---|---|---|---|---|---|
| T/Am 5 (% w/v) | S/Al 9 (% w/v) | | | | | |
| | 0 | 0.15 | 0.3 | 0.45 | 0.6 | 0.75 |
| 0 | 1.92 | 1.24 | 1.34 | 1.46 | 1.43 | 1.45 |
| 0.05 | 1.80 | 0.70 | 0.54 | 0.61 | 0.77 | 0.90 |
| 0.1 | 0.83 | 0.75 | 0.68 | 0.69 | 0.80 | 0.80 |
| 0.15 | 0.78 | 0.68 | 0.72 | 0.65 | 0.61 | 0.67 |
| 0.2 | 0.73 | 0.61 | 0.62 | 0.71 | 0.68 | 0.66 |
| 0.25 | 0.76 | 0.56 | 0.56 | 0.59 | 0.68 | 0.61 |
| Least significant difference (P=0.05) 0.20 | | | | | | |

In this study, when S/Al 9 was the sole surfactant, the lowest tested concentration (0.15%) was the most effective in potentiating glyphosate activity, there being a slight tendency for performance to deteriorate as concentration was increased above this level. When T/Am 5 was the sole surfactant, the lowest tested concentration (0.05%) gave little or no improvement in glyphosate efficacy, but a concentration of 0.1% gave very significant improvement. No further improvement was seen as T/Am 5 concentration was increased above 0.1%.

When T/Am 5 concentration was 0.1% or higher, adding S/Al 9 gave little further improvement in glyphosate efficacy in this study. However, at 0.05% T/Am 5, addition of S/Al 9 gave a response far in excess of any response that could have been predicted from the weak performance of S/Al 9 alone. This study therefore clearly shows a synergistic interaction between S/Al 9 and T/Am 5 at suboptimal levels of T/Am 5.

### Example 8

A further study was conducted to focus greater attention on low T/Am 5 concentrations and to try to confirm a synergistic interaction between T/Am 5 and S/Al 9 at such low T/Am 5 concentrations. Glyphosate rates in this study were also lower (0.07, 0.14 and 0.28 kg a.e./ha). All compositions in this Example contained glyphosate as the monoisopropylamine salt. T/Am 5 concentration was again varied independently of S/Al 9 concentration as will be clear from the tables below, in which results for all three glyphosate rates are averaged. Untreated plants had a mean regrowth height of 168 mm.

| Mean height of regrowth (mm) | | | | | | |
|---|---|---|---|---|---|---|
| T/Am 5 (% w/v) | S/Al 9 (% w/v) | | | | | |
| | 0 | 0.031 | 0.062 | 0.125 | 0.25 | 0.5 |
| 0 | 171 | 144 | 145 | 151 | 156 | 165 |
| 0.016 | 124 | 87 | 88 | 91 | 93 | 120 |
| 0.031 | 118 | 90 | 84 | 85 | 93 | 99 |
| 0.062 | 123 | 92 | 79 | 79 | 79 | 98 |
| 0.125 | 116 | 92 | 88 | 86 | 84 | 85 |
| 0.25 | 113 | 84 | 85 | 75 | 73 | 78 |
| Least significant difference (P=0.05) 11 | | | | | | |

| Mean fresh weight of regrowth (g) | | | | | | |
|---|---|---|---|---|---|---|
| T/Am 5 (% w/v) | S/Al 9 (% w/v) | | | | | |
| | 0 | 0.031 | 0.062 | 0.125 | 0.25 | 0.5 |
| 0 | 2.83 | 2.16 | 2.28 | 2.31 | 2.44 | 2.98 |
| 0.016 | 1.82 | 1.32 | 1.24 | 1.33 | 1.40 | 1.90 |
| 0.031 | 1.64 | 1.46 | 1.33 | 1.25 | 1.32 | 1.51 |
| 0.062 | 1.75 | 1.44 | 1.18 | 1.28 | 1.18 | 1.47 |
| 0.125 | 1.72 | 1.39 | 1.36 | 1.34 | 1.37 | 1.32 |
| 0.25 | 1.71 | 1.32 | 1.32 | 1.19 | 1.21 | 1.28 |
| Least significant difference (P=0.05) 0.20 | | | | | | |

As in the previous study (Example 7), when S/Al 9 was the sole surfactant, the lowest tested concentration, in this case just 0.031%, was the most effective in potentiating glyphosate activity, there being once again a slight tendency for performance to deteriorate as concentration was increased above this level. When T/Am 5 was the sole surfactant, all concentrations, even as low as 0.016%, gave significant improvement in glyphosate efficacy. No significant further improvement was seen as T/Am 5 concentration was increased above 0.016%.

Adding S/Al 9 to T/Am 5 improved glyphosate efficacy beyond that achievable with T/Am 5 alone. In this study, the improvement was seen with all combinations except for combinations of high S/Al 9 and low T/Am 5 concentration. In most cases addition to T/Am 5 of S/Al 9 gave a response far in excess of any response that could have been predicted from the weak performance of S/Al 9 alone. This study therefore confirms the synergistic interaction between S/Al 9 and T/Am 5.

Comparisons may be drawn between certain 1:1 combinations of S/Al 9 and T/Am 5 and either S/Al 9 alone or T/Am alone at the same total surfactant concentration as shown in the following table.

| Mean fresh weight of regrowth (g) | | | |
|---|---|---|---|
| Total surfactant concentration | T/Am 5 alone | 1:1 combination | S/Al 9 alone |
| 0.062 | 1.75 | 1.46 | 2.28 |
| 0.125 | 1.72 | 1.18 | 2.31 |
| 0.25 | 1.71 | 1.34 | 2.44 |

In all cases the fresh weight reduction is greater with the combination of surfactants than with either surfactant alone at the same total concentration.

While the illustrative embodiments of the invention have been described with particularity, it will be understood that various other modifications will be apparent to and can readily be made by one of skill in the art without departing from the spirit and scope of the invention.

## Claims

1. A storage-stable, liquid or dry concentrate agriculturally acceptable composition comprising :
(a) glyphosate or one or more of its salts or mixtures thereof;
(b) one or more secondary alcohol surfactants having the representative chemical structure 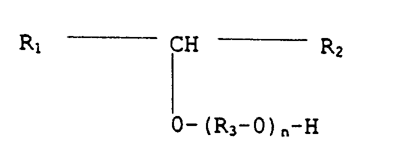 wherein R₁ and R₂ are independently straight or branched chain C₁ to about C₂₈ alkyl, aryl or alkylaryl groups and the total number of carbon atoms in R₁ and R₂ is about 7 to about 30, R₃ groups are independently C₁ to C₄ alkylene groups and n is an average number from about 3 to about 30; and
(c) one or more other surfactants selected from alkyl monoglycosides, alkyl polyglycosides, sucrose alkylesters, tertiary or quaterny alkylamine alkoxylates, non-alkoxylated tertiary or quaternary alkylamines, alkylamine oxides, or alkylbetaines.

2. The composition of Claim 1 wherein, in the structure of said alcohol surfactant, R₁ and R₂ are both straight chain alkyl groups with a total of about 7 to about 30 carbon atoms, R₃ groups are ethylene.

3. The composition of Claim 2 wherein, in the structure of said alcohol surfactant, n is an average number from about 7 to about 14.

4. The composition of Claim 2 wherein, in the structure of said alcohol surfactant, n is an average number from about 9 to about 12.

5. The composition of Claim 1 wherein said alcohol surfactant comprises a C₁₁₋₁₅ unbranched alkyl chain with an ethoxylated alcohol group at any position on the chain except at either end, and n is an average number from about 9 to about 12.

6. The composition according to any of Claims 1-5, wherein the other surfactant is selected from quaternary alkylamine alkoxylates or non-alkoxylated quaternary alkylamines.

7. The composition according to any of Claims 1-5 wherein said other surfactant is a non-alkoxylated or alkoxylated tertiary alkylamine.

8. The composition of Claim 7 comprising said alcohol surfactant and a tertiary alkylamine surfactant with about 2 to about 10 moles of ethylene oxide per mole of amine.

9. The composition of Claim 8 wherein said tertiary alkylamine surfactant is a cocoamine or tallowamine with about 2 to about 5 moles of ethylene oxide per mole of amine.

10. The composition of Claim 1 which is an aqueous concentrate formulation with a glyphosate acid equivalent loading in the range from 5 to about 40 per cent by weight or a dry concentrate composition with a glyphosate acid equivalent loading in the range from about 10 to about 75 per cent by weight.

11. The composition of Claim 10 which is a water-soluble granular formulation with a glyphosate acid equivalent loading in the range from about 40 to about 70 per cent by weight.

12. The composition of Claim 9 wherein the weight ratio of said alcohol surfactant to glyphosate acid equivalent is in the range from about 1 :20 to about 1:1.

13. The composition of Claim 9 wherein the weight ratio of said alcohol surfactant to glyphosate acid equivalent is in the range from about 1:12 to about 1:2.

14. The composition of Claim 9 wherein the weight ratio of said alcohol surfactant to glyphosate acid equivalent is in the range from about 1:6 to about 1:3.

15. The composition of Claim 9 wherein the weight ratio of said alcohol surfactant to said tertiary amine surfactant is in the range from about 1:20 to about 5:1.

16. The composition of Claim 9 wherein the weight ratio of said alcohol surfactant to said tertiary alkylamine surfactant is in the range from about 1:10 to about 2:1.

17. The composition of Claim 9 wherein the weight ratio of said alcohol surfactant to said tertiary alkylamine surfactant is in the range from about 1:5 to about 1:1.

18. Use of a composition according to any one of the preceding Claims to control unwanted vegetation.

19. Use of a surfactant composition for enhancing the efficacy of a glyphosate herbicide, comprising:
(a) one or more secondary alcohol surfactants as defined in Claims 1-5, and
(b) one or more other surfactants selected from alkyl monoglycosides, alkyl polyglycosides, sucrose alkylesters, tertiary or quaternary alkylamine alkoxylates, non-alkoxylated tertiary or quaternary alkylamines, alkylamine oxides, or alkylbetaines.

20. Use of a surfactant composition according to Claim 19 wherein the other surfactant is an alkoxylated or non-alkoxylated tertiary alkylamine.

## Patentansprüche

1. Lagerstabile, flüssige oder trockene konzentrierte, landwirtschaftlich annehmbare Zusammensetzung, umfassend:
(a) Glyphosat oder ein oder mehrere seiner Salze oder Mischungen hiervon;
(b) ein oder mehrere Sekundäralkohol-Tenside der repräsentativen chemischen Struktur 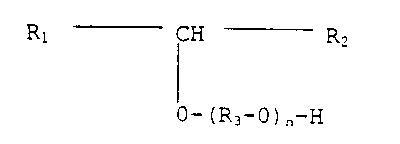 worin R₁ und R₂ unabhängig gerad- oder verzweigtkettige C₁ - bis etwa C₂₈-Alkyl-, Aryl- oder Alkylarylgruppen sind und die Gesamtanzahl der Kohlenstoffatome in R₁ und R₂ etwa 7 bis etwa 30 beträgt, die R₃-Gruppen unabhängig C₁-C₄-Alkylengruppen sind und n eine Durchschnittszahl von etwa 3 bis etwa 30 ist; und
(c) ein oder mehrere andere Tenside, gewählt aus Alkylmonoglycosiden, Alkylpolyglycosiden, Saccharosealkylestern, tertiären oder quaternären Alkylaminalkoxylaten, nichtalkoxylierten tertiären oder quaternären Alkylaminen. Alkylaminoxiden oder Alkylbetainen.

2. Zusammensetzung nach Anspruch 1, wobei in der Struktur des Alkohol-Tensids R₁ und R₂ beide geradkettige Alkylgruppen mit insgesamt etwa 7 bis etwa 30 Kohlenstoffatomen sind und die R₃-Gruppen Ethylen sind.

3. Zusammensetzung nach Anspruch 2, wobei in der Struktur des Alkohol-Tensids n eine Durchschnittszahl von etwa 7 bis etwa 14 ist.

4. Zusammensetzung nach Anspruch 2, wobei in der Struktur des Alkohol-Tensids n eine Durchschnittszahl von etwa 9 bis etwa 12 ist.

5. Zusammensetzung nach Anspruch 1, wobei das Alkohol-Tensid eine unverzweigte C₁₋₁₅-Alkylkette mit einer ethoxylierten Alkoholgruppe an irgendeiner Position der Kette, ausgenommen an jedem Ende, ist und n eine Durchschnittszahl von etwa 9 bis etwa 12 ist.

6. Zusammensetzung nach mindestens einem der Ansprüche 1-5, wobei das andere Tensid aus quaternären Alkylaminalkoxylaten oder nichtalkoxylierten quaternären Alkylaminen gewählt ist.

7. Zusammensetzung nach mindestens einem der Ansprüche 1-5, wobei das andere Tensid ein nichtalkoxyliertes oder alkoxyliertes tertiäres Alkylamin ist.

8. Zusammensetzung nach Anspruch 7, umfassend das Alkohol-Tensid und ein tertiäres Alkylamintensid mit etwa 2 bis etwa 10 Molen Ethylenoxid pro Mol Amin.

9. Zusammensetzung nach Anspruch 8, wobei das tertiäre Alkylamin-Tesid ein Kokosamin oder Talgamin mit etwa 2 bis etwa 5 Molen Ethylenoxid pro Mol Amin ist.

10. Zusammensetzung nach Anspruch 1, welche eine wäßrige konzentrierte Formulierung ist mit einer Glyphosatsäure-Äquivalentbeladung im Bereich von 5 bis etwa 40 Gew.-% oder eine trockene konzentrierte Zusammensetzung mit einer Glyphosatsäure-Äquivalentbeladung im Bereich von etwa 10 bis etwa 75 Gew.-% ist.

11. Zusammensetzung nach Anspruch 10, welche eine wasserlösliche granuläre Formulierung mit einer Glyphosatsäure-Äquivalentbeladung im Bereich von etwa 40 bis etwa 70 Gew.-% ist.

12. Zusammensetzung nach Anspruch 9, wobei das Gewichtsverhältnis des Alkohol-Tensids zu Glyphosatsäure-Äquivalent im Bereich von etwa 1:20 bis etwa 1:1 liegt.

13. Zusammensetzung nach Anspruch 9, wobei das Gewichtsverhältnis des Alkohol-Tensids zu Glyphosatsäure-Äquivalent im Bereich von etwa 1:12 bis etwa 1:2 liegt.

14. Zusammensetzung nach Anspruch 9, wobei das Gewichtsverhältnis des Alkohol-Tensids zu Glyphosatsäure-Äquivalent im Bereich von etwa 1:6 bis etwa 1:3 liegt.

15. Zusammensetzung nach Anspruch 9, wobei das Gewichtsverhältnis des Alkohol-Tensids zu dem tertiären Amin-Tensid im Bereich von etwa 1:20 bis etwa 5:1 liegt.

16. Zusammensetzung nach Anspruch 9, wobei das Gewichtsverhältnis des Alkohol-Tensids zu dem tertiären Alkylamin-Tensid im Bereich von etwa 1:10 bis etwa 2:1 liegt.

17. Zusammensetzung nach Anspruch 9, wobei das Gewichtsverhältnis des Alkohol-Tensids zu dem tertiären Alkylamin-Tensid im Bereich von etwa 1:5 bis etwa 1:1 liegt.

18. Verwendung einer Zusammensetzung nach mindestens einem der vorangehenden Ansprüche zur Kontrollierung bzw. Bekämpfung unerwünschter Vegetation.

19. Verwendung einer Tensidzusammensetzung zur Verstärkung der Wirksamkeit eines Glyphosat-Herbizids, umfassend:
(a) ein oder mehrere Sekundäralkohol-Tenside, wie in den Ansprüchen 1-5 definiert, und
(b) ein oder mehrere andere Tenside, gewählt aus Alkylmonoglycosiden. Alkylpolyglycosiden, Saccharosealkylestern, tertiären oder quaternären Alkylaminalkoxylaten, nichtalkoxylierten tertiären oder quaternären Alkylaminen. Alkylaminoxiden oder Alkylbetainen.

20. Verwendung einer Tensidzusammensetzung nach Anspruch 19, wobei das andere Tensid ein alkoxyliertes oder nichtalkoxyliertes tertiäres Alkylamin ist.

## Revendications

1. Concentré liquide ou sec, stable en conservation, d'une composition acceptable en agriculture, comprenant :
(a) du glyphosate ou un ou plusieurs de ses sels, ou leurs mélanges,
(b) un ou plusieurs tensioactifs d'alcools secondaires, ayant la formule chimique représentative suivante 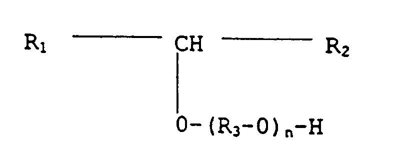 dans laquelle R₁ et R₂ sont, d'une manière indépendante, un alkyle à chaîne droite ou ramifiée en C₁ à environ C₂₈, un groupe aryle ou alkylaryle, le nombre total d'atomes de carbone dans R₁ et R₂ étant d'environ 7 à environ 30, les groupes R₃ sont, d'une manière indépendante, des groupes alkylène en C₁ à C₄ et n est un nombre moyen allant d'environ 3 à environ 30; et
(c) un ou plusieurs autres tensioactifs choisis parmi les alkylmonoglycosides, les alkylpolyglycosides, les alkylesters de saccharose, les alcoxylates d'alkylamines tertiaire ou quaternaires, les alkylamines tertiaires ou quaternaires non alcoxylées, les oxydes d'alkylamines ou les alkylbétaïnes.

2. Composition selon la revendication 1, dans laquelle, dans la structure dudit tensioactif d'alcool, R₁ et R₂ sont tous les deux des groupes alkyle à chaîne droite avec un total d'environ 7 à environ 30 atomes de carbone et les groupes R₃ sont l'éthylène.

3. Composition selon la revendication 2, dans laquelle, dans la structure dudit tensioactif d'alcool, n est un nombre moyen d'environ 7 à environ 14.

4. Composition selon la revendication 2, dans laquelle, dans la structure dudit tensioactif d'alcool, n est un nombre moyen d'environ 9 à-environ 12.

5. Composition selon la revendication 1, dans laquelle ledit tensioactif d'alcool comprend une chaîne alkyle non ramifiée en C₁₁₋₁₅ avec un groupe alcool éthoxylé situé dans n'importe quelle position de la chaîne, exception faite de l'une et l'autre extrémités, et n est un nombre moyen entre environ 9 et environ 12.

6. Composition selon l'une quelconque des revendications 1 - 5, dans laquelle l'autre tensioactif est choisi parmi les alcoxylates d'alkylamines quaternaires ou les alkylamines quaternaires non alcoxylées.

7. Composition selon l'une quelconque des revendications 1 - 5, dans laquelle ledit autre tensioactif est une alkylamine tertiaire non alcoxylée ou alcoxylée.

8. Composition selon la revendication 7, comprenant ledit tensioactif d'alcool et un tensioactif alkylamine tertiaire avec d'environ 2 à environ 10 moles d'oxyde d'éthylène par mole d'amine.

9. Composition selon la revendication 8, dans laquelle ledit tensioactif d'alkylamine tertiaire est une coprah-amine ou une suifamine avec environ 2 à environ 5 moles d'oxyde d'éthylène par mole d'amine

10. Composition selon la revendication 1, qui est une formulation aqueuse concentrée avec du glyphosate à une concentration, en équivalent d'acide, dans la plage d'environ 5 à environ 40 pour-cent en poids ou une composition concentrée sèche avec du glyphosate à une concentration, en équivalent d'acide, dans la plage d'environ 10 à environ 75 pour-cent en poids.

11. Composition selon la revendication 10, qui est une formulation de granulés solubles dans l'eau, avec du glyphosate à une concentration, en équivalent d'acide, dans la plage d'environ 40 à environ 70 pour-cent en poids.

12. Composition selon la revendication 9, dans laquelle le rapport pondéral dudit tensioactif d'alcool sur le glyphosate, en équivalent d'acide, est dans la plage d'environ 1 : 20 à environ 1 : 1.

13. Composition selon la revendication 9, dans laquelle le rapport pondéral dudit tensioactif d'alcool sur le glyphosate, en équivalent d'acide, est dans la plage d'environ 1 : 12 à environ 1 : 2.

14. Composition selon la revendication 9, dans laquelle le rapport pondéral dudit tensioactif d'alcool sur le glyphosate, en équivalent d'acide, est dans la plage d'environ 1 : 6 à environ 1 : 3.

15. Composition selon la revendication 9, dans laquelle le rapport pondéral dudit tensioactif d'alcool sur ledit tensioactif d'amine tertiaire, est dans la plage d'environ 1 : 20 à environ 5 : 1.

16. Composition selon la revendication 9, dans laquelle le rapport pondéral dudit tensioactif d'alcool sur ledit tensioactif d'alkylamine tertiaire, est dans la plage d'environ 1 : 10 à environ 2 : 1.

17. Composition selon la revendication 9, dans laquelle le rapport pondéral dudit tensioactif d'alcool sur ledit tensioactif d'alkylamine tertiaire, est dans la plage d'environ 1 : 5 à environ 1 : 1.

18. Utilisation d'une composition selon l'une quelconque des revendications précédentes pour contrôler une végétation indésirable.

19. Utilisation d'une composition de tensioactifs pour améliorer l'efficacité d'un herbicide glyphosate, comprenant :
(a) un ou plusieurs tensioactifs d'alcools secondaires comme défini dans les revendications 1 - 5, et
(b) un ou plusieurs autres tensioactifs choisis parmi les alkylmonoglycosides, les alkylpolyglycosides, les alkylesters de saccharose, les alcoxylates d'alkylamines tertiaires ou quaternaires, les alkylamines tertiaires ou quaternaires non alcoxylées, les oxydes d'alkylamines ou les alkylbétaïnes.

20. Utilisation d'une composition de tensioactifs selon la revendication 19, dans laquelle l'autre tensioactif est une alkylamine tertiaire, alcoxylée ou non alcoxylée.
